(19) Europäisches Patentamt
European Patent Office
Office européen des brevets

(11) Numéro de publication : **0 277 671 B1**

(12) # FASCICULE DE BREVET EUROPEEN

(45) Date de publication du fascicule du brevet : **08.05.91 Bulletin 91/19**

(51) Int. Cl.[5] : **C08F 14/06,** C08F 2/16, C08L 27/06, C09D 127/06

(21) Numéro de dépôt : **88200043.3**

(22) Date de dépôt : **13.01.88**

(54) **Plastisols à base de polymères du chlorure de vinyle et utilisation de ces plastisols pour l'enduction de tôles traitées par cataphorèse.**

(30) Priorité : **22.01.87 FR 8700836**

(43) Date de publication de la demande : **10.08.88 Bulletin 88/32**

(45) Mention de la délivrance du brevet : **08.05.91 Bulletin 91/19**

(84) Etats contractants désignés : **AT BE CH DE ES FR GB GR IT LI LU NL SE**

(56) Documents cités : **FR-A- 2 376 131** **US-A- 3 329 640**

(73) Titulaire : **SOLVAY & Cie (Société Anonyme) Rue du Prince Albert, 33 B-1050 Bruxelles (BE)**

(72) Inventeur : **Dusoleil, Serge Rue Bordiau, 62 B-1040 Bruxelles (BE)**
Inventeur : **Preat, Jean-Luc Max Havelaarlaan, 20 B-1850 Grimbergen (BE)**
Inventeur : **Barthelemy, Odon Boulevard Sylvain Dupuis, 282 B-1070 Bruxelles (BE)**

(74) Mandataire : **Marckx, Frieda et al Solvay & Cie Département de la Propriété Industrielle 310, rue de Ransbeek B-1120 Bruxelles (BE)**

EP 0 277 671 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des plastisols à base de polymères du chlorure de vinyle. Elle concerne plus particulièrement des plastisols à base de polymères du chlorure de vinyle dont la température de gélification est abaissée et l'adhérence sur métal après gélification est améliorée. L'invention concerne également l'utilisation de ces plastisols pour l'enduction de tôles traitées par cataphorèse.

Les plastisols ou pâtes à base de polymères du chlorure de vinyle, qui sont des dispersions de polymères du chlorure de vinyle en fines particules dans un ou plusieurs plastifiants, trouvent des débouchés multiples, notamment, dans le domaine du revêtement d'objets métalliques divers en vue de les protéger de la corrosion et/ou de l'abrasion.

Pour la préparation de tels plastisols, on fait habituellement appel à du polychlorure de vinyle obtenu par polymérisation en émulsion aqueuse à l'intervention d'agents émulsionnants classiques du type des savons (sels alcalins, alcalino-terreux ou d'ammonium d'acides gras). Les plastisols préparés à partir de tels polychlorures de vinyle conviennent pour la formulation de mastics gélifiables à 160-180°C et adhérant sur métal. Néanmoins, une demande croissante se fait jour, notamment chez les constructeurs de voitures automobiles, pour des plastisols gélifiables à des températures inférieures. Lorsqu'on gélifie les plastisols précités de l'art antérieur à des températures de l'ordre de 140°C, leur adhérence sur métal devient dérisoire, ce qui les rend inutilisables en pratique dans de telles conditions d'application.

La présente invention a pour but de procurer des plastisols à base de polymères du chlorure de vinyle qui soient gélifiables à température abaissée et qui adhèrent parfaitement sur métal après gélification.

L'invention, telle que caractérisée dans les revendications, procure des plastisols à base de polymères du chlorure de vinyle, ci-après désignés brièvement par le vocable "plastisols", gélifiables à 120-140°C et qui présentent après gélification une adhérence sur métal traité par cataphorèse égale au moins à 2 MPa et, généralement, supérieure à 2,5 MPa.

L'essence de l'invention réside dans le recours à un ou plusieurs sulfosuccinamates de métaux alcalins ou d'ammonium comme agent(s) émulsionnant(s) dans la fabrication des polymères du chlorure de vinyle entrant dans la composition des plastisols selon l'invention.

Par sulfosuccinamates de métaux alcalins ou d'ammonium, on entend désigner les produits émulsionnants répondant à la formule générale :

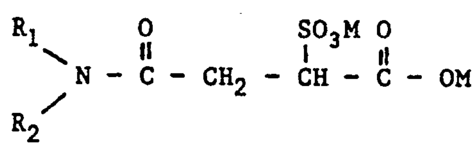 (I)

dans laquelle :

- $R_1$ et $R_2$ désignent un atome d'hydrogène, un radical alkyle en $C_8$ à $C_{32}$ ou un radical 1,2-dicarboxyéthyle de métal alcalin ou d'ammonium, $R_1$ et $R_2$ ne pouvant désigner simultanément un atome d'hydrogène, et,
- M désigne un métal alcalin ou un groupement ammonium.

Des sulfosuccinamates préférés sont ceux répondant à la formule générale (I) dans laquelle :

- $R_1$ désigne un radical alkyle en $C_{16}$ à $C_{20}$,
- $R_2$ désigne un atome d'hydrogène ou un radical 1,2-dicarboxyéthyle de métal alcalin, et,
- M désigne un métal alcalin.

Des sulfosuccinamates tout particulièrement préférés sont ceux définis ci-dessus dans lesquels :

- $R_2$ désigne un radical 1,2-dicarboxyéthyle de sodium, et,
- M désigne le sodium.

Ces sulfosuccinamates répondent donc à la formule générale :

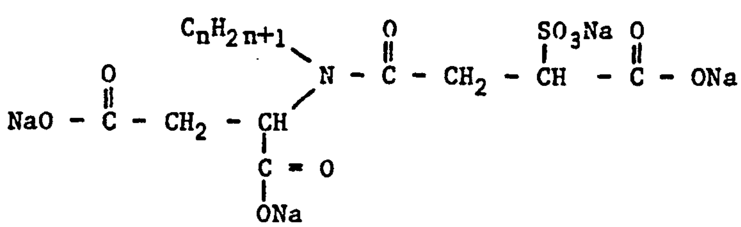

dans laquelle n désigne un nombre entier allant de 16 à 20.

Le mode d'obtention des polymères du chlorure de vinyle entrant dans la composition des plastisols selon l'invention n'est pas critique. Ces polymères peuvent donc être fabriqués par toutes les techniques de polymérisation en milieu aqueux où les monomères sont dispersés sous forme de fines gouttelettes dans une phase aqueuse à l'intervention d'un agent émulsionnant. Conviennent donc en particulier la polymérisation en émulsion aqueuse et la polymérisation en microsuspension aqueuse encore appelée en dispersion aqueuse homogénéisée.

Dans la polymérisation en émulsion aqueuse, on peut utiliser n'importe quel initiateur de polymérisation radicalaire hydrosoluble ; dans la polymérisation en microsuspension aqueuse, on peut utiliser n'importe quel initiateur de polymérisation radicalaire oléosoluble. Dans les deux cas, il est essentiel d'effectuer la polymérisation à l'intervention d'un ou de plusieurs sulfosuccinamates de métaux alcalins ou d'ammonium. On peut bien entendu associer au sulfosuccinamate un agent émulsionnant classique. Néanmoins, on donne la préférence aux polymères du chlorure de vinyle obtenus à l'intervention d'un ou de plusieurs sulfosuccinamates comme seul(s) agent(s) émulsionnant(s).

La quantité de sulfosuccinamate mise en oeuvre à la polymérisation n'est pas critique et peut varier dans une assez large mesure. Habituellement, on utilise de 0,5 à 3 parties et, de préférence, de 0,75 à 1,50 partie en poids d'agent émulsionnant au total pour 100 parties en poids de monomère(s). Le sulfosuccinamate peut, par ailleurs, être introduit dans le milieu de polymérisation en tout ou en partie au départ ou en cours de polymérisation.

En plus d'un ou de plusieurs agents émulsionnants comprenant au moins un sulfosuccinamate et d'initiateurs hydro- ou oléosolubles, selon le cas, le milieu de polymérisation peut comprendre divers additifs normalement mis en oeuvre dans les procédés conventionnels de polymérisation en émulsion et en microsuspension aqueuses. A titre d'exemples de pareils additifs, on peut citer les tampons, les agents régulateurs du diamètre des particules ou régulateurs du poids moléculaire du polymère, les stabilisants et, les colorants.

Les conditions opératoires générales de la fabrication des polymères du chlorure de vinyle entrant dans la composition des plastisols selon l'invention ne diffèrent pas de celles habituellement mises en oeuvre. La température est en général comprise entre 35 et 80°C. La pression absolue est en général inférieure à 15 kg/cm$^2$. Le pH est en général basique, par exemple compris entre 5 et 10. La quantité d'eau mise en oeuvre est en général telle que le poids total des monomères représente 20 à 50% du poids total de l'eau et des monomères.

Les polymères du chlorure de vinyle sont par ailleurs isolés de leur milieu de polymérisation de manière conventionnelle par séchage par pulvérisation et ensuite broyés de manière à obtenir des particules dont le diamètre moyen en volume soit compris entre 5 et 20 µm environ.

Par polymères du chlorure de vinyle, on entend désigner aussi bien les homopolymères que les copolymères du chlorure de vinyle contenant au moins 80% en poids de chlorure de vinyle et leurs mélanges. A titre d'exemples de comonomères utilisables, on peut citer les esters vinyliques dérivés d'acides aliphatiques saturés en $C_2$ à $C_4$, tels que l'acétate de vinyle, et les esters acryliques dérivés d'alcools aliphatiques saturés en $C_2$ à $C_{10}$, tels que l'acrylate de 2-éthylhexyle. Les polymères préférés du chlorure de vinyle sont choisis parmi les homopolymères du chlorure de vinyle et les copolymères du chlorure de vinyle contenant de 92 à 98% en poids de chlorure de vinyle, le solde étant constitué par de l'acétate de vinyle et/ou de l'acrylate de 2-éthylhexyle.

Par polymérisation du chlorure de vinyle, on entend donc désigner aussi bien l'homopolymérisation du chlorure de vinyle que sa copolymérisation avec d'autres monomères copolymérisables présents à raison de 20% au plus, tels que les esters vinyliques dérivés d'acides aliphatiques saturés en $C_2$ à $C_4$ et les esters acryliques dérivés d'alcools aliphatiques saturés en $C_2$ à $C_{10}$.

Les plastisols à base de polymères du chlorure de vinyle selon l'invention comprennent généralement de 30 à 250 parties en poids de plastifiant(s) pour 100 parties de polymère du chlorure de vinyle. Ils en contiennent, de préférence, de 60 à 150 parties en poids environ pour 100 parties de polymère du chlorure de vinyle.

Les plastifiants utilisables peuvent être choisis parmi les plastifiants usuels des polymères du chlorure de vinyle. A titre d'exemples de plastifiants usuels utilisables, on peut mentionner les phtalates, les adipates, les azélates, les sébaçates, les esters d'alcools à chaînes droites, les hydrocarbures, les paraffines chlorées et les phosphates. De manière connue de l'homme de métier, on choisira l'un ou l'autre de ces plastifiants usuels en fonction des propriétés particulières recherchées. C'est ainsi que les paraffines chlorées et les phosphates améliorent l'ininflammabilité, les esters d'acides gras et les hydrocarbures réduisent la viscosité, les phtalates à longues chaînes réduisent la volatilité, les adipates, azélates et sébaçates confèrent une souplesse accrue à basse température, etc. On donne généralement la préférence aux phtalates et, plus particulièrement encore au phtalate de 2-éthylhexyle, communément appelé phtalate de dioctyle (DOP), lequel présente le meilleur compromis entre les différentes propriétés.

Outre le(s) polymère(s) du chlorure de vinyle et d'un ou de plusieurs plastifiants, les plastisols selon l'invention peuvent comprendre d'autres ingrédients habituellement incorporés aux plastisols, tels que par exemple des stabilisants, des matières de charge, des lubrifiants, des pigments, des diluants et des épaississants.

La fabrication des plastisols selon l'invention ne pose aucun problème particulier et s'effectue de manière conventionnelle par mélange des ingrédients dans un appareillage simple du type des mélangeurs rapides à axe vertical ou des mélangeurs lents à mouvement planétaire ou à doubles pales horizontales, tout en veillant à ne pas dépasser des températures de l'ordre de 30°C afin d'éviter l'échauffement qui risquerait d'entraîner un épaississement du plastisol. Il est, par ailleurs, généralement avantageux de prédisperser certains ingrédients solides, tels que les stabilisants, charges et, pigments, dans le plastifiant utilisé afin de s'assurer de leur répartition homogène dans le plastisol.

Les plastisols selon l'invention adhèrent parfaitement sur métal après gélification à 120-140°C et conviennent pour l'enduction d'objets métalliques divers en vue de les protéger de la corrosion et/ou de l'abrasion. Ils conviennent tout particulièrement pour l'enduction de tôles traitées par cataphorèse et, en particulier pour l'enduction de dessous de véhicules automobiles, parfois appelés "bas de caisse" traités par cataphorèse qu'ils protègent notamment contre la projection de gravillons.

L'utilisation des plastisols selon l'invention pour l'enduction de tôles traitées par cataphorèse constitue un autre aspect de la présente invention.

Les exemples qui suivent illustrent l'invention.

Les examples 1 à 5 et 7 à 9, selon l'invention, concernent des plastisols à base de polymères du chlorure de vinyle fabriqués à l'intervention d'un sulfosuccinamate.

Les exemples 6 et 10, de comparaison, concernent des plastisols à base d'un polymère du chlorure de vinyle fabriqué à l'intervention d'un sel d'ammonium d'acide gras.

Les exemples 1 et 2 concernent plus précisément des plastisols à base d'homopolymères du chlorue de vinyle (nombre K mesuré à 25°C dans la cyclohexanone = 72) résultant de la polymérisation en émulsion aqueuse à 51°C à l'intervention d'un système catalytique redox du type persulfate d'ammonium/sulfate de cuivre, activé par de l'acide ascorbique.

Les exemples 3 et 4, 7 et 8, selon l'invention, concernent des plastisols à base de copolymères du chlorure de vinyle (nombre K = 68) contenant 5% en poids d'acétate de vinyle (exemple 3), respectivement 5% en poids d'acrylate de 2-éthylhexyle (exemple 4) et résultant de la copolymérisation en émulsion aqueuse à 51°C à l'intervention d'un système catalytique redox activé identique à celui utilisé dans les exemples 1 et 2.

Les exemples 5 et 9, selon l'invention, concernent des plastisols à base d'un copolymère du chlorure de vinyle (nombre K = 68) contenant 5% en poids d'acétate de vinyle et résultant de la copolymérisation en microsuspension aqueuse à 51°C à l'intervention d'un mélange d'initiateurs oléosolubles du type peroxyde de lauroyle plus peroxydicarbonate de dicétyle.

Dans l'exemple 1, le sulfosuccinamate utilisé est le N-octadécylsulfosuccinamate de sodium (formule générale I dans laquelle $R_1$ désigne un radical octadécyle, $R_2$ de l'hydrogène et M du sodium). Dans les exemples 2 à 5, 7 à 9, le sulfosuccinamate utilisé est le N-(1,2-dicarboxyéthyle), N-octadécylsulfosuccinamate de sodium (formule générale I dans laquelle $R_1$ désigne un radical octadécyle, $R_2$ un radical 1,2-dicarboxyéthyle et M du sodium).

Les exemples 6 et 10, de comparaison, concernent des plastisols à base d'un homopolymère du chlorure de vinyle de nombre K égal à 74 et résultant de la polymérisation en émulsion aqueuse à 51°C à l'intervention d'un système catalytique redox du type persulfate d'ammonium/sulfate de cuivre activé par du sulfite de sodium.

Dans les exemples 1 à 10, la quantité d'émulsionnant mise en oeuvre s'est élevée à 1 partie en poids pour 100 parties de monomère(s).

Les polymères du chlorure de vinyle fabriqués selon les exemples 1 à 10 ont été isolés de leur milieu aqueux de polymérisation, séchés par atomisation et broyés de manière à obtenir des polymères en particules ayant un diamètre moyen en volume compris entre 10 et 15 µm.

A partir des polymères du chlorure de vinyle selon les exemples 1 à 6, on a préparé des plastisols par mélange dans un mélangeur rapide des ingrédients suivant la formulation A et à partir de ceux selon les exemples 7 à 10 suivant la formulation B, toutes les quantités étant exprimées en parties en poids.

| | Formulation A | Formulation B |
|---|---|---|
| Polymère du chlorure de vinyle | 100 | 100 |
| Phtalate de 2-éthylhexyle | 65 | - |
| Phtalate d'isononyle | - | 70 |
| Huile de soya époxydée | 5 | - |
| Oxyde de zinc | 3 | 3 |
| Oxyde de calcium | - | 5 |
| Polyaminoamide | 1 | 2 |

Les plastisols résultants ont été appliqués à la spatule en une épaisseur de 2 mm entre deux échantillons (20 × 25 mm) de tôle traitée par cataphorèse (fournis par la Société Automobiles Peugeot), puis gélifiés pendant 30 minutes à 140°C (exemples 1 à 6), respectivement pendant 30 minutes à 120°C (exemples 7 à 10). Les éprouvettes ont ensuite été refroidies à température ambiante et mises au repos dans une enceinte conditionnée à 23 ± 2°C et 50 ± 5% HR pendant 24 heures (exemples 1 à 6), respectivement pendant 7 jours (exemples 7 à 10). Après ces laps de temps, on a mesuré l'adhérence des plastisols gélifiés par mesure de la résistance en traction cisaillement (tension de rupture adhésive) conformément à la Méthode d'essai D41 1108 de septembre 1979 intitulée : "Joints Colles Mastics Résistance au Cisaillement" éditée par les Sociétés Automobiles PEUGEOT et CITROEN. Dans les tableaux I et II en annexe sont repris les résultats de l'évaluation.

| TABLEAU I | |
|---|---|
| N° de l'exemple | Résistance en traction cisaillement MPa (rupture adhésive) |
| 1 | 2,8 |
| 2 | 2,8 |
| 3 | 3,6 |
| 4 | 2,4 |
| 5 | 3,5 |
| 6 | 0,4 |

| TABLEAU II | |
|---|---|
| N° de l'exemple | Résistance en traction cisaillement MPa (rupture adhésive = a; rupture cohésive = c) |
| 7 | 3,5 (a et c) |
| 8 | 3,5 (a et c) |
| 9 | 3,2 (a et c) |
| 10 | 0,7 (a) |

## Revendications

1. Plastisols à base de polymères du chlorure de vinyle, caractérisés en ce que les polymères du chlorure de vinyle résultent de la polymérisation du chlorure de vinyle en milieu aqueux à l'intervention d'un sulfosuccinamate de métal alcalin ou d'ammonium de formule générale :

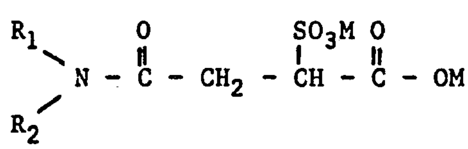
(I)

dans laquelle :

– $R_1$ et $R_2$ désignent un atome d'hydrogène, un radical alkyle en $C_8$ à $C_{32}$ ou un radical 1,2-dicarboxyéthyle de métal alcalin ou d'ammonium, $R_1$ et $R_2$ ne pouvant désigner simultanément un atome d'hydrogène, et,

– M désigne un métal alcalin ou un groupement ammonium.

2. Plastisols à base de polymères du chlorure de vinyle selon la revendication 1, caractérisé en ce que $R_1$ désigne un radical alkyle en $C_{16}$ à $C_{20}$, $R_2$ désigne un atome d'hydrogène ou un radical 1,2-dicarboxyéthyle de métal alcalin, et, M désigne un métal alcalin.

3. Plastisols à base de polymères du chlorure de vinyle selon la revendication 2, caractérisés en ce que $R_2$ désigne un radical 1,2-dicarboxyéthyle de sodium, et M désigne le sodium.

4. Plastisols à base de polymères du chlorure de vinyle selon l'une quelconque des revendications 1 à 3, caractérisés en ce que les polymères du chlorure de vinyle résultent de la polymérisation en émulsion ou en microsuspension aqueuses.

5. Plastisols à base de polymères du chlorure de vinyle selon l'une quelconque des revendications 1 à 4, caractérisés en ce que le sulfosuccinamate est mis en oeuvre à raison de 0,5 à 3 parties en poids au total pour 100 parties en poids de monomère(s).

6. Plastisols à base de polymères du chlorure de vinyle selon l'une quelconque des revendications 1 à 5, caractérisés en ce que les polymères du chlorure de vinyle sont choisis parmi les homopolymères du chlorure de vinyle.

7. Plastisols à base de polymères du chlorure de vinyle selon l'une quelconque des revendications 1 à 5, caractérisés en ce que les polymères du chlorure de vinyle sont choisis parmi les copolymères du chlorure de vinyle contenant de 92 à 98% en poids de chlorure de vinyle, le solde étant constitué par de l'acétate de vinyle et/ou de l'acrylate de 2-éthylhexyle.

8. Utilisation des plastisols à base de polymères du chlorure selon l'une quelconque des revendications 1 à 7 pour l'enduction de tôles traitées par cataphorèse.

## Claims

1. Plastisols based on vinyl chloride polymers, characterised in that the vinyl chloride polymers result from the polymerisation of vinyl chloride in aqueous medium with the aid of an alkali metal or ammonium sulphosuccinamate of general formula :

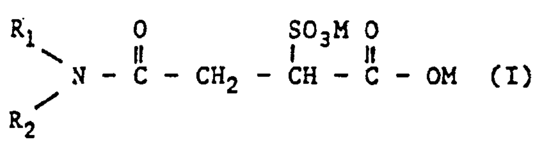

(I)

in which :

– $R_1$ and $R_2$ denote a hydrogen atom, a $C_8$-$C_{32}$ alkyl radical or an alkali metal or ammonium 1, 2-dicarboxyethyl radical, with $R_1$ and $R_2$ being incapable of denoting a hydrogen atom simultaneously, and,

– M denotes an alkali metal or an ammonium group.

2. Plastisols based on vinyl chloride polymers according to Claim 1, characterised in that $R_1$ denotes a $C_{16}$-$C_{20}$ alkyl radical, $R_2$ denotes a hydrogen atom or an alkali metal 1,2-dicarboxyethyl radical, and M denotes an alkali metal.

3. Plastisols based on vinyl chloride polymers according to Claim 2, characterised in that $R_2$ denotes a sodium 1,2-dicarboxyethyl radical and M denotes sodium.

4. Plastisols based on vinyl chloride polymers according to any one of Claims 1 to 3, characterised in that the vinyl chloride polymers result from aqueous emulsion or microsuspension polymerisation.

5. Plastisols based on vinyl chloride polymers according to any one of Claims 1 to 4, characterised in that the sulphosuccinamate is employed in a proportion of 0.5 to 3 parts by weight in all per 100 parts by weight of monomer(s).

6. Plastisols based on vinyl chloride polymers according to any one of Claims 1 to 5, characterised in that the vinyl chloride polymers are chosen from vinyl chloride homopolymers.

7. Plastisols based on vinyl chloride polymers according to any one of Claims 1 to 5, characterised in that the vinyl chloride polymers are chosen from vinyl chloride copolymers containing from 92 to 98% by weight of vinyl chloride, the remainder consisting of vinyl acetate and/or 2-ethylhexyl acrylate.

8. Use of plastisols based on vinyl chloride polymers according to any one of Claims 1 to 7 for coating sheet metal processed by electrostatic spraying.

**Ansprüche**

1. Plastisole auf der Basis von Polymeren des Vinylchlorids, dadurch gekennzeichnet, daß die Polymere des Vinylchlorids aus der Polymerisation des Vinylchlorids in wässrigem Milieu unter Zuhilfenahme eines Alkalimetall- oder Ammoniumsulfosuccinamats der allgemeinen Formel

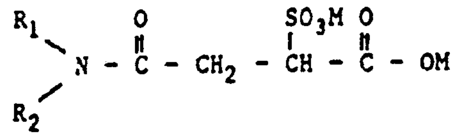
(I)

stammen, wobei

$R_1$ und $R_2$ ein Wasserstoffatom, einen $C_8$-$C_{32}$ Alkylrest oder einen Alkalimetall- oder Ammonium-1,2-dicarboxyethylrest bezeichnen und $R_1$ und $R_2$ nicht gleichzeitig ein Wasserstoffatom bezeichnen können und

M ein Alkalimetall oder eine Ammoniumgruppe bezeichnet.

2. Plastisole auf der Basis von Polymeren des Vinylchlorids nach Anspruch 1, dadurch gekennzeichnet, daß $R_1$ einen $C_{16}$-$C_{20}$ Alkylrest bezeichnet, $R_2$ ein Wasserstoffatom oder einen Alkalimetall-1,2-dicarboxyethylrest bezeichnet und M ein Alkalimetall bezeichnet.

3. Plastisole auf der Basis von Polymeren des Vinylchlorids nach Anspruch 2, dadurch gekennzeichnet, daß $R_2$ einen Natrium-1,2-dicarboxyethylrest bezeichnet und M das Natrium bezeichnet.

4. Plastisole auf der Basis von Polymeren des Vinylchlorids nach einem der Ansprüche 1 bis 3, dadurch gekennzeichnet, daß die Polymere des Vinylchlorids aus der Polymerisation in Emulsion oder wässriger Mikrosuspension stammen.

5. Plastisole auf der Basis von Polymeren des Vinylchlorids nach einem der Ansprüche 1 bis 4 dadurch gekennzeichnet, daß das Sulfosuccinamat in einer Menge von insgesamt 0,5 bis 3 Gewichtsteilen pro 100 Gewichtsteilen Monomer(en) eingesetzt wird.

6. Plastisole auf der Basis von Polymeren des Vinylchlorids nach einem der Ansprüche 1 bis 5, dadurch gekennzeichnet, daß die Polymere des Vinylchlorids ausgewählt sind unter den Homopolymeren des Vinylchlorids.

7. Plastisole auf der Basis von Polymeren des Vinylchlorids nach einem der Ansprüche 1 bis 5, dadurch gekennzeichnet, daß die Polymere des Vinylchlorids ausgewählt sind unter den Copolymeren des Vinylchlorids, die 92 bis 98 Gew.-% Vinylchlorid enthalten, wobei der Ausgleich von Vinylacetat und/oder 2-Ethylhexylacrylat gebildet wird.

8. Verwendung von Plastisolen auf der Basis von Polymeren desVinylchlorids nach einem der Ansprüche 1 bis 7 zum Überziehen von kataphoretisch behandelten Blechen.